# EUROPÄISCHE PATENTANMELDUNG

(11) **EP 2 783 990 A1**
(43) Veröffentlichungstag der Anmeldung: **01.10.2014**
(21) Anmeldenummer: 13161314.3
(22) Anmeldetag: 27.03.2013
(51) Int. Cl.: B65B 7/16, B29C 65/18, B65B 31/04

(54) **Schalenverschließmaschine und Verfahren**

(71) Anmelder: Multivac Sepp Haggenmüller GmbH & Co. KG, 87787 Wolfertschwenden (DE)
(72) Erfinder: Mader, Andreas, 87463 Dietmannsried (DE)
(74) Vertreter: Grünecker, Kinkeldey, Stockmair & Schwanhäusser

(57) **Zusammenfassung**

Die Erfindung betrifft eine Schalenverschließmaschine (10) und ein Verfahren, um Schalen (1), die mehrere zueinander geneigte Siegelebenen (3a, 3b, 3c, 3d, 3e) aufweisen, mit einer Deckelfolie (14) zu verschließen. Dabei weisen eine Schalenaufnahme (11) eine Schalenrandauflage (18) und ein Siegelwerkzeugoberteil (16) einen Siegelsteg (22) mit einer Siegelfläche (23) auf.

## Beschreibung

Die Erfindung bezieht sich auf eine Schalenverschließmaschine gemäß dem Oberbegriff des Anspruchs 1 und auf ein Verfahren mit den Merkmalen des Anspruchs 8.

Es sind Schalenverschließmaschinen bekannt, beispielsweise aus EP 1 935 789 A1, die Schalen mit einer Deckelfolie verschließen. Dabei weisen die Schalen einen Schalenrand mit Siegelflächen auf, die in einer gemeinsamen Ebene liegen und parallel zur Schalenaufnahme, einem Siegelwerkzeugoberteil und einer Folienebene der Deckelfolie innerhalb des Siegelwerkzeugs ausgerichtet sind.

Aufgabe der vorliegenden Erfindung ist es, eine Schalenverschließmaschine in ihrer Funktionalität zu erweitern.

Diese Aufgabe wird gelöst durch eine Schalenverschließmaschine mit den Merkmalen des Anspruchs 1 und ein Verfahren zum Betrieb einer Schalenverschließmaschine mit den Merkmalen des Anspruchs 8. Vorteilhafte Weiterbildungen der Erfindung sind in den Unteransprüchen angegeben.

Die erfindungsgemäße Schalenverschließmaschine umfasst eine Schalenaufnahme und ein Siegelwerkzeugoberteil, wobei die Schalenaufnahme eine umlaufende Schalenrandauflage zum Tragen eines Schalenrands einer Schale aufweist. Das Siegelwerkzeugoberteil weist eine Schneideinrichtung und einen umlaufenden Siegelsteg auf, um eine Deckelfolie auf den Schalenrand entlang einer Siegelnaht aufzusiegeln. Die Schalenverschließmaschine zeichnet sich dadurch aus, dass die Schalenrandauflage wenigstens einen ersten Bereich mit einer ersten Auflageebene und einen zweiten Bereich mit einer zweiten Auflageebene aufweist, wobei die erste und zweite Auflageebene eine Neigung zueinander aufweisen. Dies bringt den Vorteil mit sich, dass besonders attraktive und auffallende Packungen erzeugt werden können, die eine dreidimensional ausgestaltete (d.h. von einer reinen zweidimensionalen Ebene abweichende) Siegelung aufweisen. Mit einer solchen erfindungsgemäßen Schalenverschließmaschine können verschiedenartigste Schalen, die eine nicht nur in einer einzigen Ebene liegende Siegelnaht aufweisen, mit einer Deckelfolie auch unter Vakuum oder mittels Begasung unter modifizierter Atmosphäre gesiegelt werden.

Unter der Neigung der Auflageebenen sind auch fließende Übergänge wie konkave oder konvexe Wölbungen der Auflageebene einbezogen, da hierbei die Tangenten an unterschiedlichen Positionen eines solchen Verlaufs der Auflageebene eine Neigung zueinander aufweisen.

Unter einer umlaufenden Schalenrandauflage oder einem umlaufendem Siegelsteg sind auch unterbrochene, nicht durchgehende, Flächen zu verstehen.

Dabei weist der Siegelsteg bevorzugt eine Siegelfläche mit wenigstens einem ersten Bereich mit einer ersten Siegelfläche und einem zweiten Bereich mit einer zweiten Siegelfläche auf, wobei die erste und zweite Siegelfläche eine Neigung zueinander aufweisen. Somit ist ein für eine hermetische Siegelnaht notwendiger und gleichmäßiger Siegeldruck auf die umlaufende Siegelnaht aufbringbar.

Vorzugsweise sind die umlaufende Schalenrandauflage und der umlaufende Siegelsteg kongruent zueinander ausgeführt.

Die Schneideinrichtung weist bevorzugt ein umlaufendes Schneidmesser auf, um die Deckelfolie aus einer Folienbahn auszuschneiden, bevor sie auf den Schalenrand der Schale aufgesiegelt wird. Die Messerkante kann dabei einen zum Schalenrand kongruenten Verlauf aufweisen oder eine in nur einer Ebene liegende Messerkante, die parallel zum Siegelwerkzeugoberteil und zur Schalenaufnahme ausgerichtet ist, aufweisen.

Dabei weist das Schneidmesser in einer besonders vorteilhaften Ausführung einen seitlichen Abstand gegenüber dem Siegelsteg auf, der in Abhängigkeit von der Neigung der Siegelflächen ausgebildet ist. Wenn X den Neigungswinkel und L die Länge eines unter dem Neigungswinkel X relativ zur Horizontalen verlaufenden Abschnitts eines Schalenrandes bezeichnet, kann der seitliche Abstand Z insbesondere mit Z = L (1-Cos (X)) gewählt sein.

Vorzugsweise weist das Schneidmesser gegenüber den Siegelflächen des Siegelstegs einen Überstand von wenigstens 1 mm auf, damit die Deckelfolie aus der Folienbahn heraustrennbar ist, während die Folienbahn von dem Siegelwerkzeugoberteil und der Schalenauflage geklemmt wird und sich der Siegelsteg zusammen mit dem Schneidmesser der Schalenrandauflage mittels einer Relativbewegung des Siegelstegs gegenüber dem Siegelwerkzeugoberteil annähert.

In einer vorteilhaften alternativen Ausführungsform weist das Schneidmesser gegenüber der Siegelfläche des Siegelstegs einen konstanten Überstand auf.

Das erfindungsgemäße Verfahren zum Betrieb einer Schalenverschließmaschine zum Ansiegeln einer Deckelfolie auf einen dreidimensional ausgeformten Schalenrand einer Schale weist folgende Schritte auf:
- Einlegen einer Schale in eine Schalenaufnahme, wobei der Schalenrand entlang einer Schalenrandauflage von der Schalenaufnahme getragen wird, wobei die Schalenrandauflage kongruent zum Schalenrand ausgebildet ist,
- Aufeinanderzubewegen der Schalenaufnahme und eines Siegelwerkzeugoberteil, d.h. Durchführen einer Schließbewegung, bei der sich, unterstützt durch einen oder mehrere entsprechende Antriebe, die Schalenaufnahme zum Siegelwerkzeugoberteil bewegt und/oder das Siegelwerkzeugoberteil zur Schalenaufnahme bewegt,
- Klemmen einer Folienbahn zwischen der Schalenaufnahme und dem Siegelwerkzeugoberteil,
- Schneiden einer Deckelfolie aus der Folienbahn mittels der Schneideinrichtung, während des Aufeinanderzubewegens,
- nur teilweises Aufliegen der Deckelfolie auf dem Schalenrand,
- Umlegen der übrigen, bisher noch nicht auf dem Schalenrand aufliegenden Deckelfolie an den Schalenrand mittels eines Siegelstegs des Siegelwerkzeugoberteils während des Aufeinanderzubewegens,
- Gesamtes Aufliegen der Deckelfolie auf dem Schalenrand,
- Klemmen und Siegeln der Deckelfolie auf den Schalenrand mittels einer Siegelfläche des Siegelstegs.

Der Schritt des Umlegens der Deckelfolie sollte dazu führen, dass am Ende dieses Schrittes jeder Abschnitt des Schalenrandes mit der Deckelfolie bedeckt ist.

Dieses Verfahren hat den Vorteil, dass Schalen mit einem dreidimensionalen (d.h. nicht nur in einer zweidimensionalen Ebene befindlichen) Schalenrand mit einer Deckelfolie verschließbar sind und dabei das Schneiden der Deckelfolie in einer Abmessung ausführbar ist, die beim Siegeln auf den Schalenrand kongruent zu den Abmessungen der Schalenrandauflage bzw. des Siegelstegs und somit der Siegelnaht sein kann, um eine nicht oder nur kaum über die Siegelnaht überstehende Deckelfolie zu erzeugen, welches zu einer besonders attraktiven Verpackung führt.

Vorzugsweise wird die Deckelfolie mit dem ersten Kontakt der Schneideinrichtung mit der Folienbahn komplett ausgeschnitten, um ein spannungsfreies Klemmen der Deckelfolie auf dem Schalenrand zu ermöglichen. Die Formulierung "komplett ausgeschnitten" bedeutet, dass die Deckelfolie aus der Folienbahn ausgetrennt ist, noch bevor die Deckelfolie als Gesamtes auf dem Schalenrand aufliegt.

In einer besonders vorteilhaften Ausführung wird eine Schnittkante der Deckelfolie so erzeugt, dass die Schnittkante nach dem Umlegen, Klemmen und Siegeln der Deckelfolie einen konstanten Abstand gegenüber einer Siegelnaht aufweist. Dies ermöglicht eine besonders attraktive Verpackung.

Denkbar ist es bei der vorliegenden Erfindung, die Siegelnaht auf einem Schalenrand zu erzeugen, der relativ zur Horizontalen und/oder relativ zu einer von der Öffnung der Schale aufgespannten Ebene geneigt ist, beispielsweise nach außen geneigt ist.

Im Folgenden wird ein vorteilhaftes Ausführungsbeispiel der Erfindung anhand einer Zeichnung näher erläutert. Im Einzelnen zeigen:
- Fig. 1: eine Schale mit einem dreidimensionalen Schalenrand,
- Fig. 2: eine erfindungsgemäße Schalenverschließmaschine,
- Fig. 3: eine perspektivische Schnittansicht der Schalenaufnahme und des Siegelwerkzeugoberteils quer zur Produktionsrichtung in geöffneter Stellung,
- Fig. 4: eine Schnittansicht der Schalenaufnahme und des Siegelwerkzeugoberteils in geöffneter Stellung,
- Fig. 5: eine Schnittansicht der Schalenaufnahme und des Siegelwerkzeugoberteils beim Klemmen der Deckelfolie,

- Fig. 6: eine Schnittansicht der Schalenaufnahme und des Siegelwerkzeugoberteils beim Schneiden der Deckelfolie wird,
- Fig. 7: eine Schnittansicht der Schalenaufnahme und des Siegelwerkzeugoberteils beim Siegeln und
- Fig. 8: eine Ausschnittsvergrößerung des Schalenrands.
Gleiche Komponenten sind in den Figuren durchgängig mit gleichen Bezugszeichen versehen.

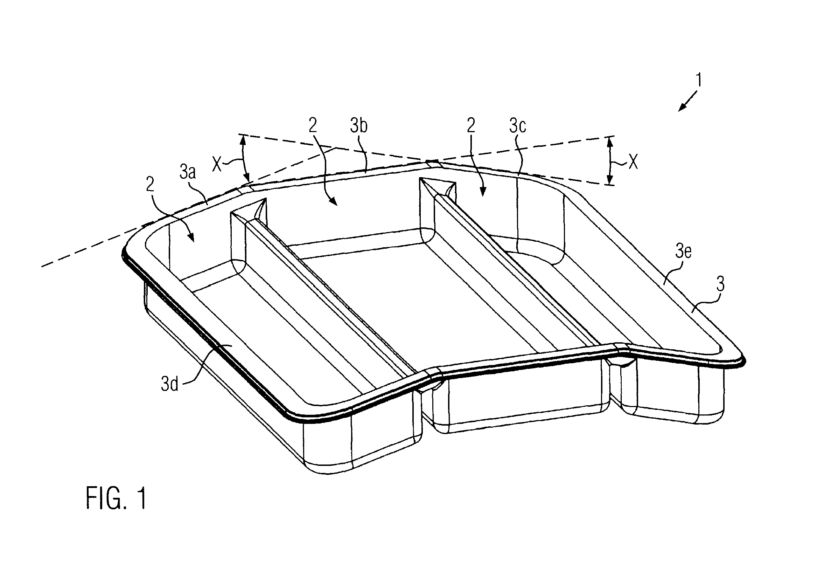

Fig. 1 zeigt eine Schale 1 mit einer Aufteilung in drei Partitionen 2, die beispielsweise mit drei unterschiedlichen Produkten befüllbar sind. Die Schale 1 weist einen umlaufenden Schalenrand 3 auf, wobei der Schalenrand 3 in drei Bereiche 3a, 3b, 3c aufteilbar ist. Die drei Bereiche 3a, 3b, 3c des Schalenrands 3 definieren drei verschiedene Siegelebenen und haben jeweils eine Neigung X zueinander, so dass ein dreidimensionaler Schalenrand 3 bzw. eine dreidimensionale Siegelung vorliegt. Beispielsweise ist die Siegelebene 3b horizontal ausgerichtet und die zwei seitlich davon angeordneten Siegelebenen 3a und 3b sind nach außen hin nach unten geneigt. Dies führt dazu, dass der linke Bereich 3d der Siegelebene 3a und rechte Bereich 3e der Siegelebene 3c gegenüber dem Schalenrand 3 der Siegelebene 3b unterhalb bzw. tiefer liegen. Zum Vergleich: Konventionelle Schalen zum Verpacken vorzugsweise von Lebensmitteln wiesen ausschließlich einen zweidimensional ausgerichteten Siegelrand auf, so dass eine zweidimensionale Siegelebene vorliegt.

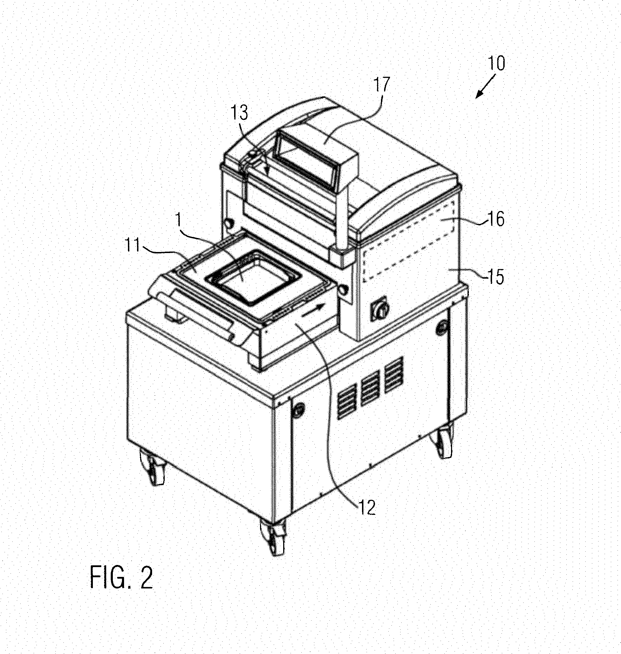

Fig. 2 zeigt eine Schalenverschließmaschine 10 zur Aufnahme einer Schale 1 in einer Schalenaufnahme 11, die in einer verschiebbaren Schublade 12 vorgesehen ist. Die Schalenverschließmaschine 10 weist eine Aufnahme 13 für eine in der Fig. 1 nicht näher dargestellte Folienbahn 14a auf, die zusammen mit der Schublade 12 unter ein hinter einer Verkleidung 15 vorgesehenes Siegelwerkzeugoberteil 16 mithineingezogen und von der Aufnahme 13 abgerollt wird. Eine Steuerung 17 steuert die einzelnen Schritte des Verpackungsprozesses, bei dem eine Deckelfolie 14 aus der Folienbahn 14a geschnitten und auf die Schale 1 gesiegelt wird, nachdem das Innere der Schale 1 evakuiert und/oder begast wurde, um eine modifizierte Atmosphäre innerhalb der Verpackung zu erzeugen, damit eine maximale Haltbarkeit erreicht werden kann.

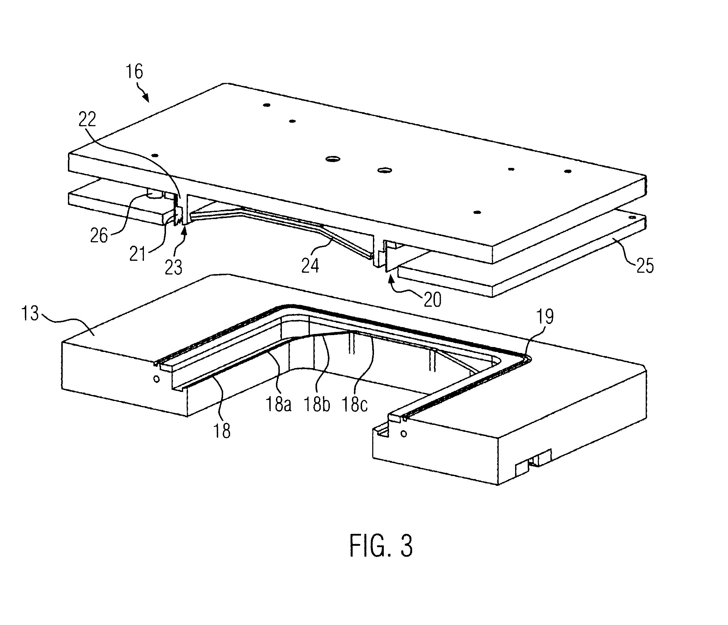

Fig. 3 zeigt eine perspektivische Ansicht eines Schnittes durch die Schalenaufnahme 11 und das Siegelwerkzeugoberteil 16. Die Schalenaufnahme 11 weist eine umlaufende Schalenrandauflage 18 auf, die den Schalenrand 3 der Schale 1 (in Fig. 1 gezeigt) trägt. Die Schalenaufnahme 11 umfasst eine umlaufende Dichtung 19, um die Folienbahn 14a, die zur besseren Darstellung in Fig. 3 nicht gezeigt ist, zwischen der Schalenaufnahme 11 und dem Siegelwerkzeugoberteil 16 luftdicht klemmen zu können. Die Schalenrandauflage 18 weist auf jeweils zwei Seiten einen ersten Bereich mit einer ersten Auflageebene 18a, einen zweiten Bereich mit einer zweiten Auflageebene 18b und einen dritten Bereich mit einer dritten Auflageebene 18c auf. Die erste Auflageebene 18a weist gegenüber der zweiten Auflageebene 18b eine Neigung auf und die zweite Auflageebene 18b weist gegenüber der dritten Auflageebene 18c eine Neigung auf. Die erste Auflageebene 18a ist parallel zur dritten Auflageebene 18c ausgerichtet, aber beide Auflageebenen 18a, 18c weisen einen vertikalen Versatz zueinander auf.

Das Siegelwerkzeugoberteil 16 umfasst eine Schneideinrichtung 20 in Form eines umlaufenden Schneidmessers 21 mit einem Zackenschnitt und einen umlaufenden Siegelsteg 22, dessen Siegelfläche 23 eine zur Schalenrandauflage 18 bzw. den Bereichen 18a, b, c und dem Schalenrand 3 kongruenten Verlauf aufweist. Das Siegelwerkzeugoberteil 16 umfasst noch eine Produktschutzplatte 24, die in der Schale 1 befindlichen Produkte vor der Wärmestrahlung des Siegelwerkzeugoberteils 16 und des Siegelstegs 22 schützt, da das Siegelwerkzeugoberteil 16 erwärmbar ist, um die Wärme über den Siegelsteg 22 zum Siegeln der Deckelfolie 14 und dem Schalenrand 3 zuführen zu können, damit eine luftdichte Siegelnaht erzeugt werden kann. Das Siegelwerkzeugoberteil 16 umfasst noch eine Klemmplatte 25, um die Folienbahn 14a zwischen der Schalenaufnahme 11 und dem Siegelwerkzeugoberteil 16 entlang der Dichtung 19 luftdicht zu klemmen. Der Siegelsteg 22 und die Schneideinrichtung 20 sind gegenüber der Klemmplatte 25 relativ bewegbar über Führungen 26 ausgeführt.

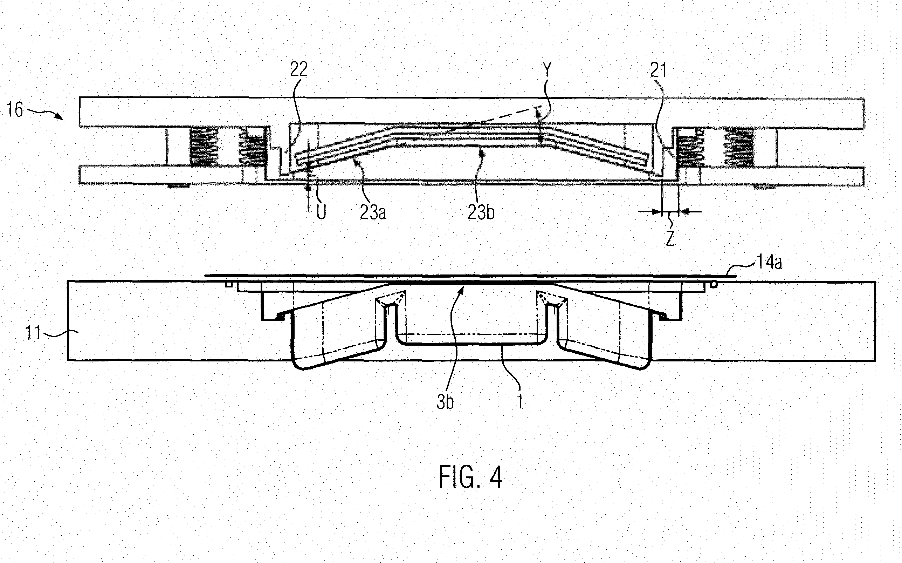

Fig. 4 zeigt eine Schnittansicht der Schalenaufnahme 11 mit der Schale 1 und des Siegelwerkzeugoberteils 16 sowie der Folienbahn 14a in einer geöffneten Stellung, nachdem die Schalenaufnahme 11 mittels der Schublade 12 unter das Siegelwerkzeugoberteil 16 zusammen mit der Folienbahn 14a gebracht wurde. Die Folienbahn 14a steht dabei noch nicht mit der Schale 1 bzw. der horizontalen oben befindlichen Siegelebene 3b in Kontakt. Der Siegelsteg 22 weist eine Siegelfläche 23 mit wenigstens einem ersten Bereich mit einer ersten Siegelfläche 23a und einem zweiten Bereich mit einer zweiten Siegelfläche 23b auf, wobei die erste und zweite Siegelfläche 23a, 23b eine Neigung Y zueinander aufweisen. Das Schneidmesser 21 weist einen horizontalen, seitlichen Abstand Z gegenüber dem Siegelsteg 22 auf, der in Abhängigkeit von der Neigung Y der Siegelflächen 23a, 23b ausgebildet ist. Das Schneidmesser 21 weist gegenüber der Siegelfläche 23 des Siegelstegs 22 einen vertikalen Überstand U von wenigstens 1 mm auf. Die Siegelfläche 23 bezieht sich auf den gesamten umlaufenden Verlauf der Siegelfläche 23 selbst, während die erste und zweite Siegelfläche 23a, 23b sich lediglich auf bestimmte Teilbereiche bzw. Teilstücke der Siegelfläche 23 beziehen.

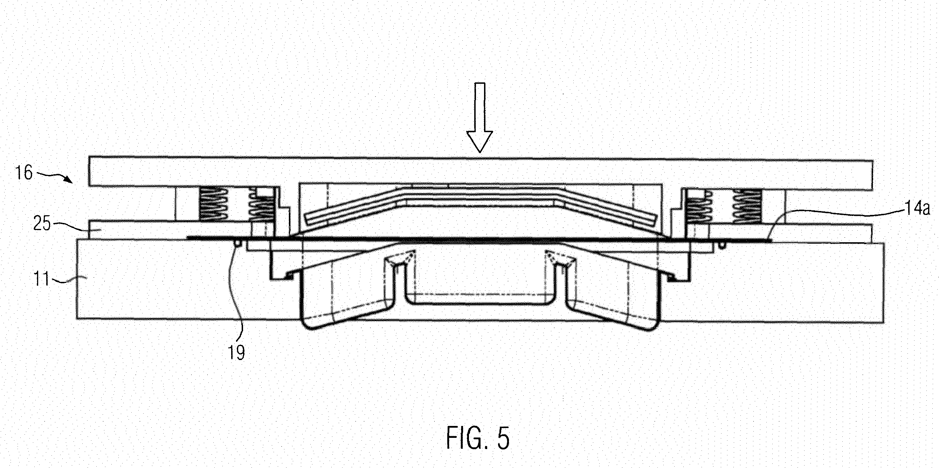

In Fig. 5 ist das Siegelwerkzeugoberteil 16 nach unten soweit bewegt worden, bis die Klemmplatte 25 die Folienbahn 14a gegen die Dichtung 19 luftdicht klemmt.

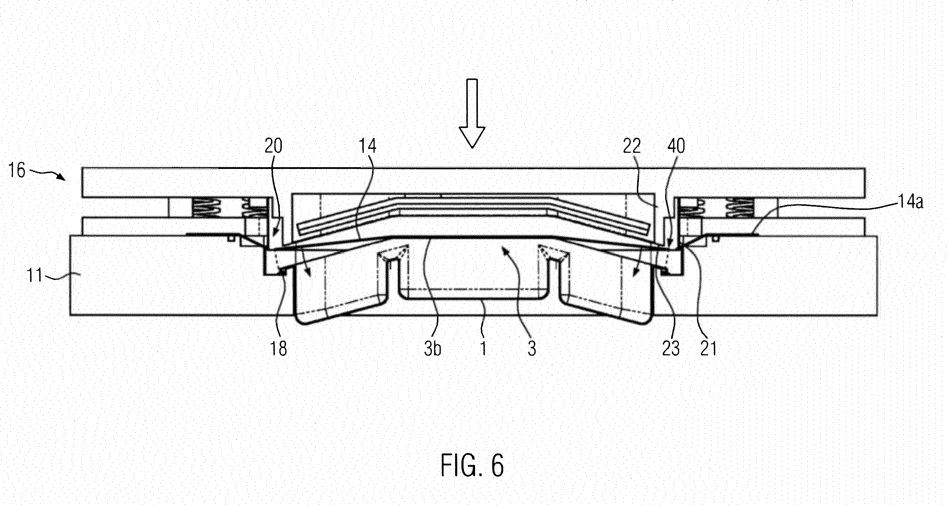

In Fig. 6 ist das Schneiden der Folienbahn 14a gezeigt, wobei sich das Siegelwerkzeugoberteil 16 mit der Schneideinrichtung 20 nach unten an die Schalenaufnahme 11 bewegt wurde. Dabei drückt die Schneideinrichtung 20 die Folienbahn 14a mit der gezackten Schneidkante des Schneidmessers 21 nach unten, wobei die Folienbahn 14a nur teilweise auf dem oberen mittig angeordneten Schalenrand 3 bzw. der horizontalen oben befindlichen Siegelebene 3b aufliegt und dadurch die Folienbahn 14a gespannt wird. Entspricht diese Spannung der Schneidkraft, so trennt die Schneideinrichtung 20 die Deckelfolie 14 aus der Folienbahn 14a entlang der Schneidkante des umlaufenden Schneidmessers 21 aus, um die Deckelfolie 14 aus der Folienbahn 14a auszuschneiden, bevor die Deckelfolie 14 komplett auf dem Schalenrand 3 aufliegt. Beim Schneiden erhält die Deckelfolie 14 eine Schnittkante 40.

Die nun ausgetrennte Deckelfolie 14 liegt auf einem Teil des Schalenrands 3 auf und wird durch die vorhandene Reibung gehalten, während die Weiterbewegung des Siegelstegs 22 mit seiner Siegelfläche 23 den noch nicht auf der Schale 1 aufliegenden Teil der Deckelfolie 14 weiter dem Schalenrand 3 entgegen bewegt. Am Ende der Bewegung des Siegelwerkzeugoberteils 16 drückt der Siegelsteg 22 mit seiner Siegelfläche 23 den äußeren Teil der Deckelfolie 14 gegen den Schalenrand 3 und weiter gegen die Schalenrandauflage 18. Durch die gemeinsame dreidimensionale kongruente Ausformung der Siegelfläche 23, des Schalenrands 3 und der Schalenrandauflage 14 ist eine Erzeugung einer gleichmäßigen umlaufenden Siegelnaht 30 mittels Druck und Temperatur über eine gewisse Zeitspanne, die durch das Siegelwerkzeugoberteil 16 aufgebracht wird, gegeben, um eine hermetisch verschlossene Verpackung herzustellen.

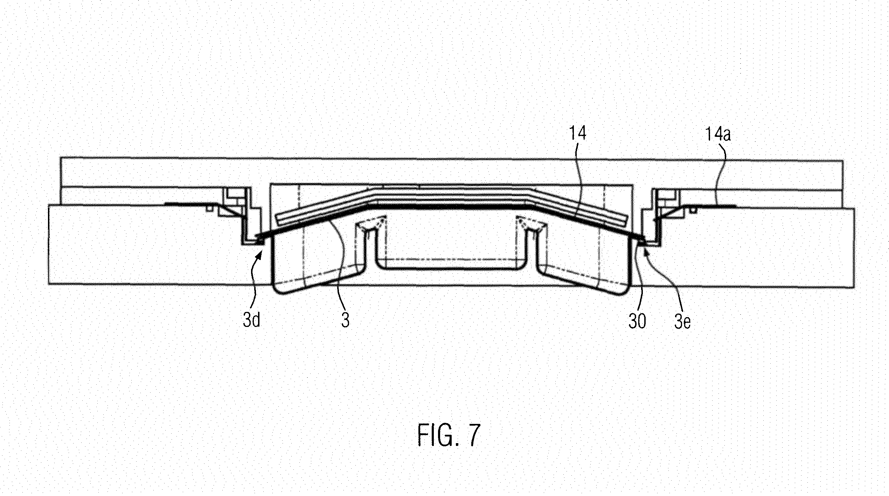

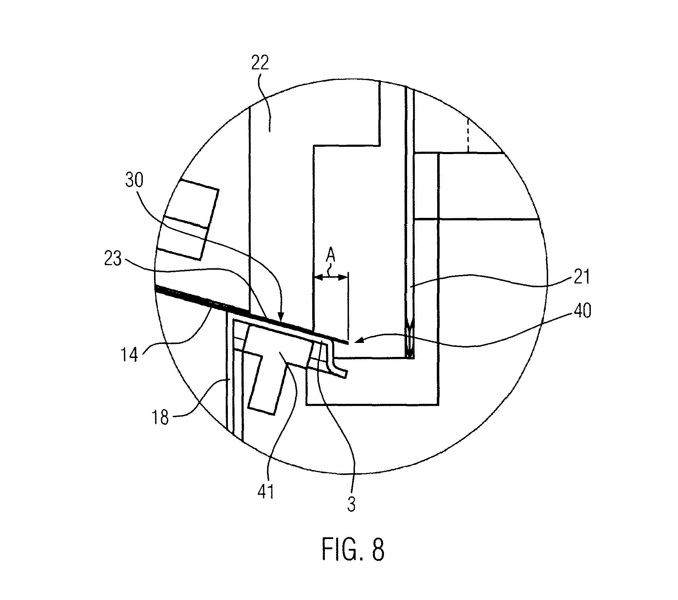

Anhand der Fig. 7 soll auch erläutert werden, dass die Schneideinrichtung 20 derart gestaltet sein kann, dass Deckelfolie 14 aus der Folienbahn 14a in der in der Zeichnung dargestellten rechten und linken Seite weiter außen geschnitten wird, damit die Schnittkante 40 nach dem Aufliegen der Deckelfolie 14 auf dem Schalenrand 3 in den Bereichen 3d und 3e nicht weiter über die erzeugte Siegelnaht 30 heraussteht als bei den Seiten, die in der Zeicheneben vorne und hinten gelegen sind. Somit ist ein konstanter Abstand A (s. Fig. 8) zwischen der Schnittkante 40 und dem äußeren Rand des Schalenrands 3 erzeugbar.

Fig. 8 zeigt in einer Ausschnittsvergrößerung den Schalenrand 3 und die Schnittkante 40 der Deckelfolie 14 sowie das Schneidmesser 21. Zwischen der Schalenrandauflage 18 und dem Schalenrand 3 ist eine T-förmige Silikondichtung 41 vorgesehen. Die Siegelnaht 30 wird durch die Siegelfläche 23 des Siegelstegs 22 in Verbindung mit der T-förmigen Silikondichtung 41 auf der gegenüberliegenden Seite des Schalenrands 3 erzeugt. Die Schnittkante 40 der Deckelfolie 14 weist einen Abstand A von der Siegelnaht 30 auf. Der Abstand A ist bevorzugt umlaufend konstant entlang der Siegelnaht 30.

Bei der erfindungsgemäßen Schalenverschließmaschine 10 kann die Zuführung der Folienbahn 14a sowohl wie gezeigt längs als auch quer zur Transportrichtung der Schale 1 ausgeführt werden. Es fallen auch Schalenverschließmaschinen 10 unter die Erfindung, die mehrere Schalen 1 gleichzeitig in einem Arbeitstakt verschließen. Diese Schalenverschließmaschinen können mehrspurig und/oder mehrreihig ausgeführt sein, wobei mehrspurig benachbarte Schalen nebeneinander und mehrreihig benachbarte Schalen hintereinander in einer Produktionsrichtung jeweils in einem Arbeitstakt bedeutet.

## Patentansprüche

1. Schalenverschließmaschine (10), umfassend eine Schalenaufnahme (11) und ein
Siegelwerkzeugoberteil (16), wobei die Schalenaufnahme (11) eine umlaufende Schalenrandauflage (18) zum Tragen eines Schalenrands (3) einer Schale (1) aufweist, und wobei das Siegelwerkzeugoberteil (16) eine Schneideinrichtung (20) und einen umlaufenden Siegelsteg (22) aufweist, um eine Deckelfolie (14) auf den Schalenrand (3) entlang einer Siegelnaht (30) aufzusiegeln, **dadurch gekennzeichnet, dass** die Schalenrandauflage (18) wenigstens einen ersten Bereich mit einer ersten Auflageebene (18a) und einen zweiten Bereich mit einer zweiten Auflageebene (18b) aufweist, wobei die erste und zweite Auflageebene (18a, 18b) eine Neigung (X) zueinander aufweisen.

2. Schalenverschließmaschine nach Anspruch 1, **dadurch gekennzeichnet, dass** der Siegelsteg (22) eine Siegelfläche (23) mit wenigstens einem ersten Bereich mit einer ersten Siegelfläche (23a) und einem zweiten Bereich mit einer zweiten Siegelfläche (23b) aufweist, wobei die erste und zweite Siegelfläche (23a, 23b) eine Neigung (Y) zueinander aufweisen.

3. Schalenverschließmaschine nach einem der vorangehenden Ansprüche, **dadurch gekennzeichnet, dass** die umlaufende Schalenrandauflage (18) und der umlaufende Siegelsteg (22) kongruent zueinander sind.

4. Schalenverschließmaschine nach einem der vorangehenden Ansprüche, **dadurch gekennzeichnet, dass** die Schneideinrichtung (20) ein umlaufendes Schneidmesser (21) aufweist.

5. Schalenverschließmaschine nach Anspruch 4, **dadurch gekennzeichnet, dass** das Schneidmesser (21) einen seitlichen Abstand (Z) gegenüber dem Siegelsteg (22) aufweist, wobei der Abstand in Abhängigkeit von der Neigung (Y) der Siegelflächen (23a, 23b) ausgebildet ist.

6. Schalenverschließmaschine nach einem der Ansprüche 4 oder 5, **dadurch gekennzeichnet, dass** das Schneidmesser (21) gegenüber der Siegelfläche (23) des Siegelstegs (22) einen Überstand (U) von wenigstens 1 mm aufweist.

7. Schalenverschließmaschine nach einem der Ansprüche 4 bis 5, **dadurch gekennzeichnet, dass** das Schneidmesser (21) gegenüber den Siegelflächen (23a, 23b) des Siegelstegs (22) einen konstanten Überstand (U) aufweist.

8. Verfahren zum Betrieb einer Schalenverschließmaschine (10) zum Ansiegeln einer Deckelfolie (14) auf einen dreidimensional ausgeformten Schalenrand (3) einer Schale (1), wobei das Verfahren folgende Schritte aufweist:
- Einlegen einer Schale (1) in eine Schalenaufnahme (11), wobei der Schalenrand (3) entlang einer Schalenrandauflage (18) von der Schalenaufnahme (11) getragen wird, wobei die Schalenrandauflage (11) kongruent zum Schalenrand (3) ausgebildet ist,
- Aufeinanderzubewegen der Schalenaufnahme (11) und eines Siegelwerkzeugoberteil (16),
- Klemmen einer Folienbahn (14a) zwischen der Schalenaufnahme (11) und dem Siegelwerkzeugoberteil (16),
- Schneiden einer Deckelfolie (14) aus der Folienbahn (14a) mittels der Schneideinrichtung (20), während des Aufeinanderzubewegens,
- nur teilweises Aufliegen der Deckelfolie (14) auf dem Schalenrand (3),
- Umlegen der übrigen, bisher noch nicht auf dem Schalenrand (3) aufliegenden Deckelfolie (14) an den Schalenrand (3) mittels eines Siegelstegs (22) des Siegelwerkzeugoberteils (16) während des Aufeinanderzubewegens,
- Klemmen und Siegeln der Deckelfolie (14) auf den Schalenrand (3) mittels einer Siegelfläche (23) des Siegelstegs (22).

9. Verfahren nach Anspruch 8, **dadurch gekennzeichnet, dass** die Deckelfolie (14) mit dem ersten Kontakt der Schneideinrichtung (20) mit der Folienbahn (14a) komplett ausgeschnitten wird.

10. Verfahren nach einem der Ansprüche 8 oder 9, **dadurch gekennzeichnet, dass** eine Schnittkante (40) der Deckelfolie (14) so erzeugt wird, dass die Schnittkante (40) nach dem Umlegen, Klemmen und Siegeln der Deckelfolie (14) einen konstanten Abstand (A) gegenüber einer Siegelnaht (30) aufweist.

11. Verfahren nach einem der Ansprüche 8 bis 10, **dadurch gekennzeichnet, dass** eine Siegelnaht (30) auf einem Abschnitt des Schalenrands (3) erzeugt wird, der gegenüber der Horizontalen oder gegenüber einer von einer Öffnung der Schale (1) aufgespannten Ebene geneigt ist.
